# EUROPÄISCHE PATENTANMELDUNG

(11) **EP 2 398 126 A1**
(43) Veröffentlichungstag der Anmeldung: **21.12.2011**
(21) Anmeldenummer: 10166155.1
(22) Anmeldetag: 16.06.2010
(51) Int. Cl.: H02J 9/06, H05B 33/08, B61L 29/24

(54) **Not-Energieversorgungseinheit für Signalleuchtmittel**

(71) Anmelder: Siemens Schweiz AG, 8047 Zürich (CH)
(72) Erfinder: Schmid, Rolf, 8712 Stäfa (CH); Diethelm, Bernhard, 8854, Galgenen (CH)
(74) Vertreter: Kley, Hansjörg

(57) **Zusammenfassung**

Für Signalleuchtmittel (LED₁, LEDₙ), die bei einer Aktivierung den Begriff HALT oder GEFAHR anzeigen, wird zur sicheren Energieversorgung eine Schaltung mit einer ersten Betriebsfallspeise-Einheit (20) und einer zweiten Hilfsquelle (24) vorgeschlagen. Die zweite Hilfsquelle ist dabei induktiv (T1) an den Signalleuchtmittelstromkreis gekoppelt. Auf diese Weise entfällt die Verwendung von Schaltern im Betrieb in der Rückfallebene.

## Beschreibung

Die vorliegende Erfindung bezieht sich auf eine Energieversorgungseinheit für Signalleuchtmittel gemäss dem Oberbegriff des Patentanspruch 1.

In der Eisenbahnsignaltechnik ist es von besonderer Wichtigkeit, dass die Signalleuchtmittel stets einen definierten Anzeigezustand aufweisen. Dies ist insbesondere bei Signalen von Bedeutung, bei denen der Dunkelzustand die Bedeutung KEINE GEFAHR aufweist. Dies trifft beispielsweise zu bei unbewachten Bahnübergängen. Nur wenn ein Zug sich dem Bahnübergang nähert, wird die Warnleuchte aktiviert, allenfalls mit akustischer Unterstützung.

Heute sind folgende Lösungen für die Ansteuerung von Signalleuchtmitteln bekannt:

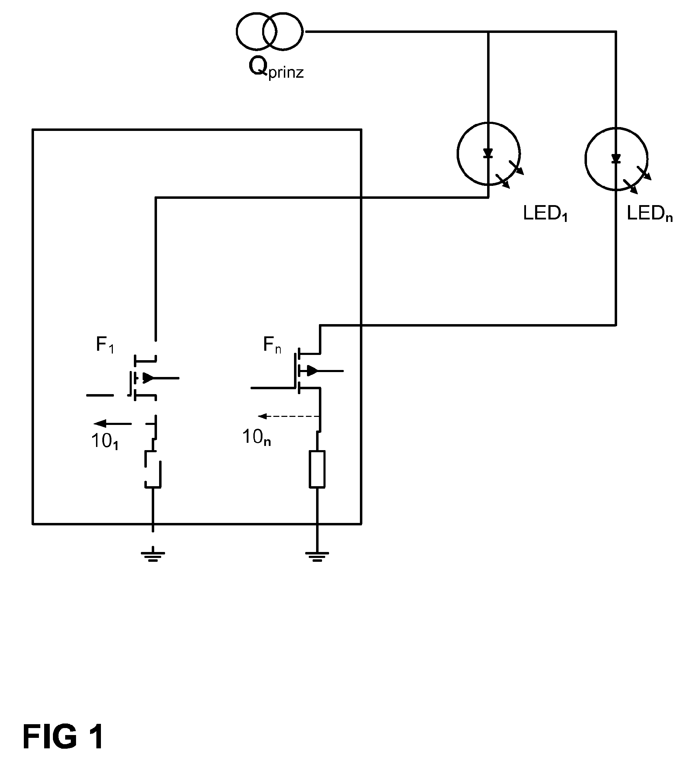

i) Figur 1 zeigt ein Signal, dass auf zwei LED-Modulen LED₁, LEDₙ beruht, die je einen eigenen Leitungspfad mit individueller Stromüberwachung 10₁, 10₂ aufweisen. Ein Ausfall der Hauptquelle Q_{prinz} kann durch die Stromüberwachung nicht erkannt werden, da beide das gleiche Resultat liefern.

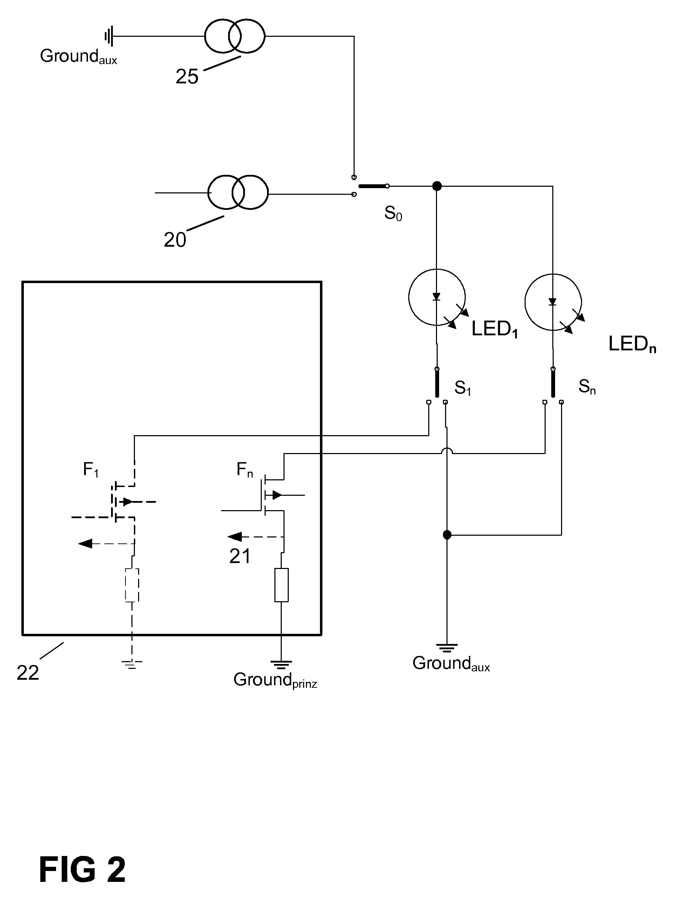

ii) Figur 2 zeigt ein Signal, das ebenfalls auf zwei LED-Modulen LED₁, LEDₙ beruht. Zusätzlich ist jedoch eine zweite, sogenannt redundante Energieversorgung 25 vorgesehen, die mit einem (Um-) Schalter S₀ im Bedarfsfall anstelle der Hauptquelle 20 zugeschaltet werden kann. Zu beachten ist, dass die Masse Groundₐᵤₓ der Hilfsquelle elektrisch von der Masse Ground_{prinz} der Hauptquelle verschieden ist. Diese Verschiedenheit der Massen hat folgenden technischen Grund:
Damit werden Ausgleichsströme und parasitäre Störungseffekte verhindert.
Da die Massen elektrisch verschieden sind, erfolgt die Umschaltung nicht nur mit dem Schalter S₀, sondern zusätzlich mit einer Umschaltung der Masse, hier mit den Schaltern S₁, Sₙ. Mit der Indizierung 1 ... n ist angedeutet, dass mehr als zwei Leuchtmittel auf diese Weise redundant versorgt werden können.

Auch die Lösung ii) deckt nicht alle Fehlerfälle ab:
Ein Ausfall der Treiberkarte 22 führt dazu, dass die optische Warnung durch die Signalleuchtmittel LED₁ und LEDₙ unterbleibt. An dieser Stelle wird nochmals darauf hingewiesen, dass in der Anordnung und Anwendung das Aussenden von Licht eine Gefahr signalisiert. Bei den Signalen für einen Lokomotivführer gilt üblicherweise eine andere sichere Regel: Inaktive bzw. «dunkle» Signale haben stets die Bedeutung von «HALT», «GEFAHR».

Der vorliegenden Erfindung liegt daher die Aufgabe zugrunde, eine Energieversorgungseinheit für Signalleuchtmittel anzugeben, die auch in Fehlerfällen die sichere Versorgung von Signalleuchten für die Anzeige einer Gefahr sicherstellt.

Diese Aufgabe wird durch die im unabhängigen Patentanspruch angegebenen Massnahmen gelöst. Vorteilhafte Ausgestaltungen der Erfindung sind in weiteren Ansprüchen angegeben.

Durch das Vorsehen einer induktiven Kopplung über einen Trafo braucht es im Signalleuchtmittelstromkreis keine mechanischen Kontakte mehr. Dies erhöht die Zuverlässkeit und die Verfügbarkeit in einem Fehlerfall. Die induktive Ankopplung kann auf einfache Weise in einer bestehenden Energieversorgungseinheit eingebaut worden.

So können sich die folgenden Vorteile zusätzlich ergeben:

i) Durch das Vorsehen einer AC-Quelle als Hilfsquelle kann die Stromauswertung unabhängig vom Signalleuchtmittelkreis im Primärkreis vorgenommen werden. Dadurch ist kein Eingriff im Signalleuchtmittelkreis erforderlich, was die Zuverlässigkeit der erfindungsgemässen Energieversorgungseinheit zusätzlich erhöht.

ii) Da im Betrieb in der Rückfallebene alle Signalleuchtmittel per Definition mit Energie versorgt werden, führt ein Ausfall einzelner aber nicht aller Signalleuchtmittel noch nicht dazu, dass fälschlicherweise keine Gefahr signalisiert wird.

Die Erfindung wird nachfolgend anhand der Zeichnung beispielsweise näher erläutert. Dabei zeigen:

Figur 1 Bekannte Lösung für die Ansteuerung von Leuchtmitteln;

Figur 2 Bekannte Lösung für die Ansteuerung von Leuchtmitteln mit einer Haupt- und Hilfsquelle;

Figur 3 Blockschaltbild gemäss einem Ausführungsbeispiel der vorliegenden Erfindung in der Darstellung für den normalen Betriebsfall;

Figur 4 Blockschaltbild gemäss einem Ausführungsbeispiel der vorliegenden Erfindung in der Darstellung für den Betrieb in der Rückfallebene.

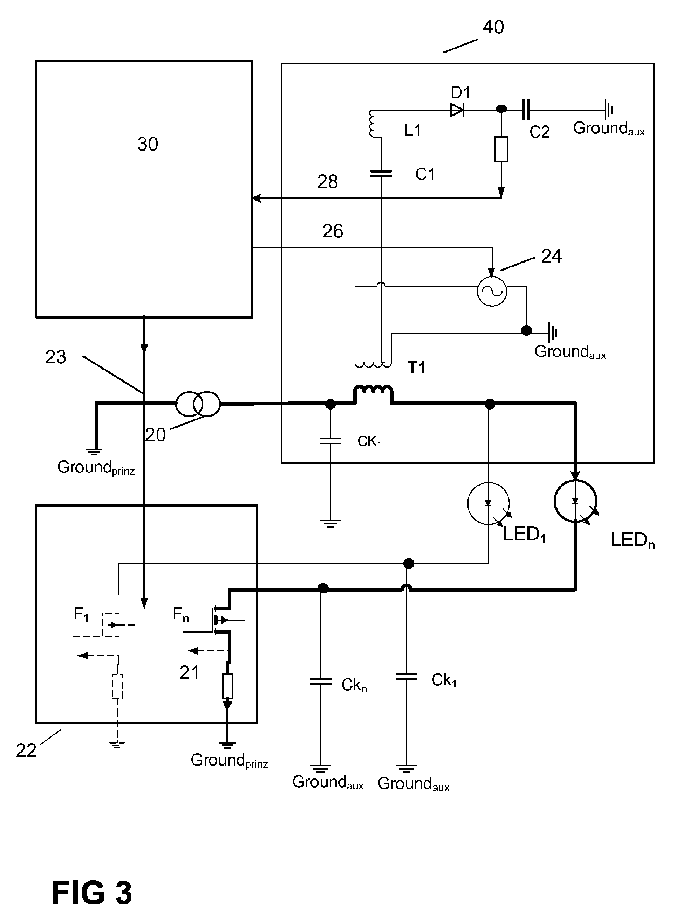

Figur 3 zeigt ein Ausführungsbeispiel der vorliegenden Erfindung für den normalen Betriebsfall: Ein sicherer Rechner 30 mit definiertem Abschaltverhalten nach SIL 0-4 aktiviert die Treiberkarte 22 für den normalen Betriebsfall. Diese Aktivierung erfolgt über eine Steuerleitung 23. Anstelle eines Rechners 30 kann auch eine speicherprogrammierbare Steuerung SPS 30 vorgesehen sein. Ob Rechner 30 oder SPS 30: Beide haben die Anforderung SIL 0-4 im Sinne der Normenfamilien IEC 61508 [1] und IEC61511 [2] zu erfüllen. Eine Hauptquelle 20 speist ein als LED ausgebildetes Signalleuchtmittel. Gemäss der Figur 3 ist es beispielhaft die LEDₙ. n steht dabei für einen Index n aus einer vorgegebenen Anzahl 1 .. N von mit aus der Quelle 20 zu versorgenden LED's. Dementsprechend sind auch die übrigen Teil indiziert:
Schalter F₁, .. Fₙ.
Mit der Stromauswertung 21 wird der tatsächliche Status der LEDₙ ausgewertet.

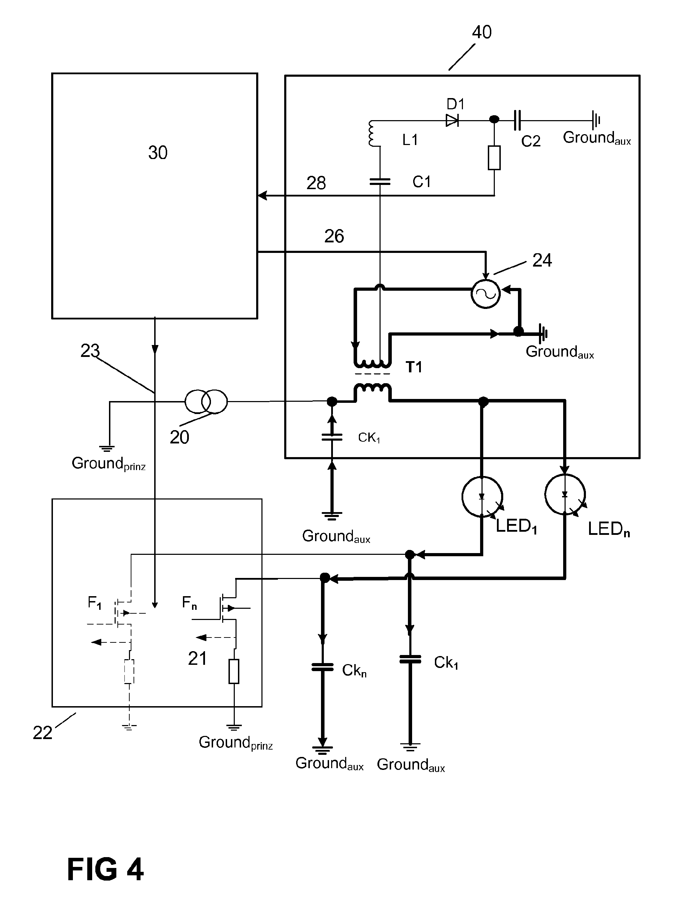

Figur 4 zeigt das Ausführungsbeispiel der vorliegenden Erfindung gemäss der Figur 3 für den Betrieb in der Rückfallebene: Aus irgendeinem Grund sei die Hauptquelle 20 (auch Betriebsfallspeise-Einheit 20 genannt) oder die Treiberkarte 22 nicht mehr in der Lage, eine LEDₙ mit Energie zu versorgen bzw. anzusteuern. Die SPS 30 oder der Rechner 30 aktivieren über eine Steuerleitung 26 eine Hilfsquelle 24 zur Aktivierung der Rückfallebene. Die Hilfsquelle 24 gibt eine AC-Spannung ab. Ein Strom fliesst über eine (Primär-)Spule eines Trafos T1. Die Sekundärspule dieses Trafos T1 speist nun über die Masse Groundₐᵤₓ die LED₁ .. LEDₙ mit Energie. Ein Abgriff an der Primärwicklung des Trafos T1 erlaubt über die Kapazität C1 und die Induktivität L1 eine Auswertung 28 von Amplitude und Frequenz. Damit ist die sichere Rückmeldung eine Stromflusses im Kreis Hilfsquelle 24 und Primärspule des Trafos T1 unter Annahme einer definierten Last von LED₁ .. LEDₙ sichergestellt. Auf diese Weise kann ein Fehlerfall von LED₁ .. LEDₙ festgestellt werden. Sollte ein Fehlerfall von allen LEDs bis auf eine einzige LEDₓ auftreten, führt dieser Fehler immer noch nicht dazu, dass fälschlicherweise keine Gefahr signalisiert wird. Die Hilfsquelle 24, der Trafo T1 und die Stromauswertung 28 bilden die sogenannte Rückfallebenenspeisung 40.

Für die Hilfsquelle ist eine Frequenz im Bereich 1kHz bis 20kHz vorgesehen. Im Betrieb in der Rückfallebene - also bei Aktivierung der Hilfsquelle 24) fliesst der Strom im Sekundärkreis über Kondensatoren CKx zurr Masse Groundₐᵤₓ. Diese Kondensatoren sind CKx sind so dimensioniert, dass sie in dieser Betriebsart eine tiefe Serie-Impedanz aufweisen.

Das vorstehende erläuterte Ausführungsbeispiel bezog sich auf als LED ausgebildete Signalleuchtmittel. Die Erfindung ist gleichermassen auch anwendbar für folgende Signalleuchtmittel (nicht abschliessende Aufzählung):
- Glühlampen,
- Blitzlampen,
- Drehleuchten.
Die betreffenden Signalleuchtmittel müssen nur die Eigenschaft aufweisen, mit Wechselstrom (AC) gespeist werden zu können.

### Liste der Bezugszeichen, Glossar

- 10₁, 10₂: Stromüberwachung
- 20: Betriebsfallspeise-Einheit; Hauptquelle; DC-Quelle, AC-Quelle
- 21: Stromauswertung
- 22: Treiberkarte
- 23: Aktivierung Betriebsfallspeise-Einheit; Steuerleitung für Aktivierung Betriebsfallspeise-Einheit
- 24: Hilfsquelle, AC-Quelle
- 25: Hilfsquelle, Redundante Quelle, Batterie
- 26: Aktivierung Rückfallebene, Steuerleitung für Aktivierung Rückfallebene
- 28: Überprüfung Frequenz / Amplitude
- 30: SPS, sicherer Rechner mit definiertem Abschaltverhalten SIL 0-4;
- 40: Rückfallebenenspeisung
- F_{1'} Fₙ: Schalter, Relais-Kontakt; MOS-FET
- Groundₐᵤₓ: Masse der Hilfsquelle
- Ground_{prinz}: Masse der Hauptquelle
- LED1 , LED₂: Signalleuchtmittel,
- Qₐᵤₓ: Hilfsquelle, zweite Quelle, DC-, AC-Quelle
- Q_{prinz}: Hauptquelle, DC-, AC-Quelle
- S₀, S_{1,} Sₙ: Umschalter
- SIL: Sicherheits-Integritätslevel nach der Normenfamilie IEC 61511-x und IEC 61508-x
- SPS: Speicherprogrammierbare Steuerung
- T1: Übertrager; Transformator

### Verzeichnis der zitierten Literatur

[1] IEC 61508
   «Functional safety of electrical/electronic/programmable electronic safety-related systems»
[2] IEC 61511
   «Functional safety - Safety instrumeted systems for the process industry sector»

## Patentansprüche

1. Energieversorgungseinheit für ein Signalleuchtmittel (LED₁, LED_{N}), wobei die Energieversorgungseinheit umfasst:
- eine erste Energiequelle (20) und davon unabhängig eine zweite Energiequelle (24);
- Schalter (F₁, Fₙ) für die bedarfsweise Zuschaltung der der ersten Energiequelle (20) zu einem oder mehreren Signalleuchtmitteln (LED₁, LEDₙ), wobei die Signalleuchtmittel (LED₁, LEDₙ) mit dem Aussenden von Licht eine Gefahr signalisieren;
**dadurch gekennzeichnet, dass**
- bei Ausfall der ersten Energiequelle (20) die zweite Energiequelle (24) eine AC-Spannung abgibt und induktiv über einen Transformator an den Stromkreis der mit Energie zu versorgenden Signalleuchtmittel (LED₁, LEDₙ) gekoppelt ist, so dass alle Signalleuchtmittel (LED₁, LEDₙ) mit Energie versorgt werden.

2. Energieversorgungseinheit nach Anspruch 1,
**dadurch gekennzeichnet, dass**
die Schalter (F₁, Fₙ) für die bedarfsweise Zuschaltung der Signalleuchtmittel in einer Treiberkarte (22) angeordnet sind und dass für jedes Signalleuchtmittel (LED₁, LEDₙ) eine Stromauswertung (21) vorgesehen ist.

3. Energieversorgungseinheit nach Anspruch 2,
**dadurch gekennzeichnet, dass**
ein Rechner (30) oder eine speicherprogrammierbare Steuerung (30) vorgesehen ist, der die Schalter (F₁, Fₙ) der Treiberkarte (22) über eine Steuerleitung (23) aktiviert und dass alternativ beim Ausfall der ersten Energiequelle über eine weitere Steuerleitung (26) die Hilfsquelle (24) vom Rechner (30) bzw von der speicherprogrammierbaren Steuerung (30) aktivierbar ist.

4. Energieversorgungseinheit nach einem der Ansprüche 1 bis 3,
**dadurch gekennzeichnet, dass**
die Hauptquelle (20) und die Hilfsquelle (24) je mit einer eigenen Masse (Ground_{prinz}, Groundₐᵤₓ) verbunden sind, wobei die beiden Massen (Ground_{prinz} , Groundₐᵤₓ) voneinander elektrisch getrennt sind.

5. Energieversorgungseinheit nach Anspruch 4,
**dadurch gekennzeichnet, dass**
bei einer Aktivierung der Signalleuchtmittel mittels der Hilfsquelle über den Trafo (T1) der Signalleuchtmittelstromkreis über je einen Kondensator (CK₁, CKₙ) mit der Masse (Groundₐᵤₓ) der Hilfsquelle verbunden sind.

6. Energieversorgungseinheit nach einem der Ansprüche 1 bis 5,
**dadurch gekennzeichnet, dass**
der Hilfsquellenstromkreis (24)einer Stromüberwachung (28) unterzogen wird.

7. Energieversorgungseinheit nach einem der Ansprüche 1 bis 6,
**dadurch gekennzeichnet, dass**
für Stromüberwachung (28) des Hilfsquellenstromkreises ein Abgriff an der Primärwicklung des Trafos (T1) vorgesehen ist, so dass über einen Kondensator (C1) und eine Induktivität (L1) die Auswertung (28) auch eine Auswertung von Amplitude und Frequenz des Hilfsquellenstromkreises (24) umfasst.
